# EUROPEAN PATENT SPECIFICATION

(11) **EP 3 447 669 B1**
(45) Date of publication and mention of the grant of the patent: **11.11.2020**
(21) Application number: 17900903.0
(22) Date of filing: 23.06.2017
(51) Int. Cl.: G06F 21/55, H04L 29/06, G06F 21/62

(54) **INFORMATION LEAKAGE DETECTION METHOD AND DEVICE, SERVER, AND COMPUTER-READABLE STORAGE MEDIUM**
VERFAHREN UND VORRICHTUNG ZUR ERKENNUNG VON INFORMATIONSENTWEICHUNG, SERVER UND COMPUTERLESBARES SPEICHERMEDIUM
PROCÉDÉ ET DISPOSITIF DE DÉTECTION DE FUITE D'INFORMATIONS, SERVEUR ET SUPPORT D'INFORMATIONS LISIBLE PAR ORDINATEUR

(30) Priority: 17.03.2017 CN 201710164043
(43) Date of publication of application: 27.02.2019
(73) Proprietor: Ping An Technology (Shenzhen) Co., Ltd., Shenzhen, Guangdong 518000 (CN)
(72) Inventor: WANG, Huyuan, Shenzhen City Guangdong 518000 (CN)
(74) Representative: Osterhoff, Utz
(86) International application number: PCT/CN2017/089807
(87) International publication number: WO 2018/166099

(56) References cited:
- CN-A- 102 012 985
- CN-A- 104 123 370
- CN-A- 105 939 359
- CN-A- 106 156 017
- US-A1- 2005 055 399
- US-A1- 2014 195 798

## Description

The present application is the National Stage of International Application No. PCT/CN2017/089807, filed Jun. 23, 2017, which claims the benefit of China Patent Application No. 201710164043.7, filed March 17, 2017 before the State Intellectual Property Office and entitled "Method and Device for Detecting Information Leakage, Server, and Computer-readable Storage Medium".

### TECHNICAL FIELD

The present disclosure relates to the technical field of information security, and more particularly relates to a method and a device for detecting information leakage, a server, and a computer-readable storage medium.

### BACKGROUND

In order to guarantee user's information security, a server typically detects leakage of information through a web application vulnerability scanner. To do so, the server defines some specific keywords (e.g., "email," or "username,") in advance that correspond to some sensitive information, and then compares the parameter included in a scanned record against the predefined keywords, so that when any parameter that is consistent with any one of the keywords shows up in the scanned record, it would indicate that plaintext transmission of sensitive information is being used, which would also indicate the risk of information leakage. However, if the parameter "USERNAME" appears in a newly developed system http request while the specific keywords include the keyword "username" but not the keyword "USERNAME", the parameter "USERNAME" would not be matched or identified; the same goes with the parameter "uname" that shows up in the http request leaving it unidentified, resulting in plaintext transmission of the sensitive information, hence the risk of information leakage.

Since the above method just roughly detects the presence of any plaintext transmission of sensitive information, it requires security testers to invest more efforts for subsequent analysis and inspection. This not only reduces the efficiency of identifying the leakage of sensitive information, but requires the security testers to put in additional labor.

Patent No. CN105939359A provides a method and device for detecting privacy leakage of a mobile terminal. The method comprises the steps of monitoring and detecting current network data streams of the mobile terminal by use of an established coarse granularity detection model, wherein the coarse granularity detection model is established through a header feature keyword set and a uniform resource locator URL parameter feature character string set which are extracted from network data stream samples and are associated with privacy information leakage; and judging that the privacy leakage exists in the current network data streams of the mobile terminal if it is detected that the current network data streams of the mobile terminal contain header feature keywords and/or URL parameter character strings.

Patent No. US2005055399A1 provides a method reassembles complete client-server conversation streams, applies decoders and/or decompressors, and analyzes the resulting data stream using multi-dimensional content profiling and/or weighted keyword-in-context. The method may detect the extrusion of the data, for example, even if the data has been modified from its original form and/or document type. The decoders may also uncover hidden transport mechanisms such as, for example, e-mail attachments. The method may further detect unauthorized (e.g., rogue) encrypted sessions and stop data transfers deemed malicious.

### SUMMARY

One main object of the present disclosure is to provide a method for detecting information leakage and device, a server and a computer-readable storage medium to improve efficiency of detecting information leakage and reduce the risk of information leakage.

In order to accomplish the above-mentioned object, the present disclosure provides a method for detecting information leakage, the method including the following operations: a request message is received from a channel party; then parameters included in the request message are matched against keywords obtained in advance through machine learning, and a matching degree between the parameter and the keyword is obtained based on the matching result; when the matching degree is higher than a preset threshold, it is determined that information of the request message is leaked and related information of the request message is then recorded;
wherein the operation of matching a parameter included in the request message against a keyword obtained in advance through machine learning, and obtaining a matching degree between the parameter and the keyword based on the matching result includes:
matching the parameter included in the request message against the keyword obtained in advance through machine learning, to determine a plurality of first matching degrees between the parameter and the keyword, wherein the plurality of first matching degrees respectively correspond to a plurality of meanings of the parameter;
determining the matching degree between the parameter and the keyword based on the plurality of first matching degrees and a context of the parameter in the request message.

To accomplish the above-mentioned object, the present disclose further provides a server that includes a processor and a memory. The processor is configured to execute an information leakage detection program stored in the memory to perform the following operations: receiving a request message sent from a channel party; matching parameters included in the request message against keywords obtained in advance through machine learning, and obtaining a matching degree between the parameter and the keyword based on the matching result; and when the matching degree is higher than a preset threshold, determining information of the request message is leaked and recording the related information of the request message;

wherein the operation of matching a parameter included in the request message against a keyword obtained in advance through machine learning, and obtaining a matching degree between the parameter and the keyword based on the matching result includes:
matching the parameter included in the request message against the keyword obtained in advance through machine learning, to determine a plurality of first matching degrees between the parameter and the keyword, wherein the plurality of first matching degrees respectively correspond to a plurality of meanings of the parameter;
determining the matching degree between the parameter and the keyword based on the plurality of first matching degrees and a context of the parameter in the request message.

To accomplish the above-mentioned object, the present disclosure still further provides a computer-readable storage medium, which stores one or more programs executable by one or more processors to perform the following operations: receiving a request message sent from a channel party; matching parameters included in the request message against keywords obtained in advance through machine learning, and obtaining a matching degree between the parameter and the keyword based on the matching result; and when the matching degree is higher than a preset threshold, determining information of the request message is leaked and recording the related information of the request message;
wherein the operation of matching a parameter included in the request message against a keyword obtained in advance through machine learning, and obtaining a matching degree between the parameter and the keyword based on the matching result includes:
matching the parameter included in the request message against the keyword obtained in advance through machine learning, to determine a plurality of first matching degrees between the parameter and the keyword, wherein the plurality of first matching degrees respectively correspond to a plurality of meanings of the parameter;
determining the matching degree between the parameter and the keyword based on the plurality of first matching degrees and a context of the parameter in the request message.

In accordance with the embodiments of the present disclosure, after receiving a request message sent from a channel party, the parameter included in the request message are matched against the keywords obtained in advance through machine learning to obtain a matching degree between the parameter and the keyword. When the matching degree between the parameter and the keyword is higher than a preset threshold, the information of the request message is determined as leaked and as such the related information of the request message would be recorded. Therefore, more keywords can be automatically identified based on machine learning, which allows the sensitive information to be identified in a very efficient manner, reducing the efforts required of security testers, improving the efficiency of detecting information leakage, and reducing the risk of information leakage.

### BRIEF DESCRIPTION OF THE ACCOMPANYING DRAWINGS

FIG. 1 is a flow diagram of a first embodiment of a method for detecting information leakage according to the present disclosure;
FIG. 2 is a flow diagram of a second embodiment of the method for detecting information leakage according to the present disclosure;
FIG. 3 is a flow diagram of a third embodiment of the method for detecting information leakage according to the present disclosure;
FIG. 4 is a flow diagram of a fourth embodiment of the method for detecting information leakage according to the present disclosure;
FIG. 5 is a flow diagram of a fifth embodiment of the method for detecting information leakage according to the present disclosure;
FIG. 6 is a functional block diagram of a first embodiment of a device for detecting information leakage according to the present disclosure;
FIG. 7 is a functional block diagram of a fourth embodiment of the device for detecting information leakage according to the present disclosure;
FIG. 8 is a functional block diagram of a fifth embodiment of the device for detecting information leakage according to the present disclosure; and
FIG. 9 is a structural diagram of a hardware execution environment of a server related to the embodiments of the present disclosure.

The achievement of the object, functional features and advantages of the present disclosure will be further described with reference to the embodiments and accompanying drawings.

### detailed description of illustrative embodiments

It is to be understood that, all specific embodiments described herein serve only for illustrative purpose, and are not a limitation of the disclosure.

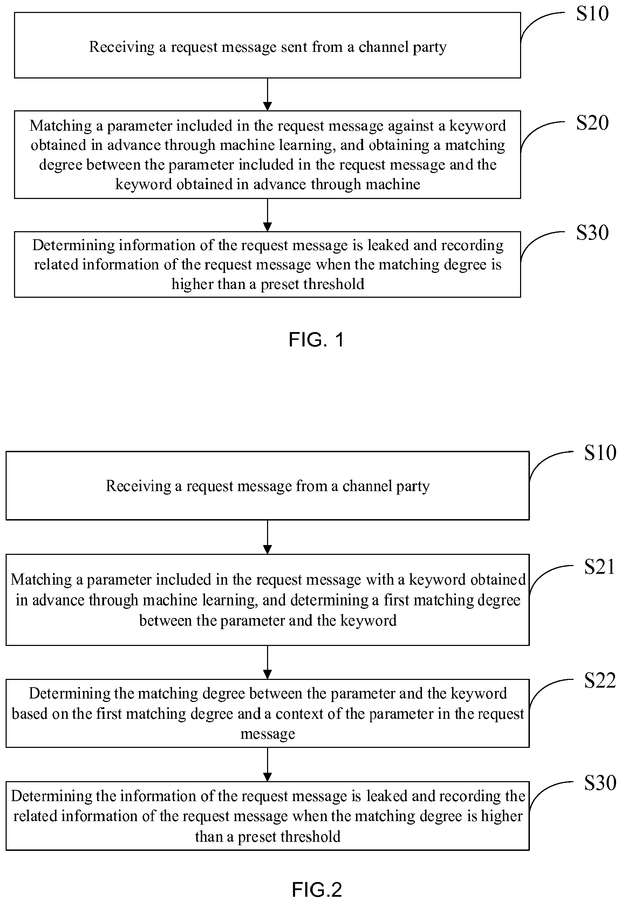

FIG. 1 shows a first embodiment of a method for detecting information leakage according to the present disclosure. The method for detecting information leakage in the embodiment includes:
step S10, receiving a request message sent from a channel party.

In the present embodiment, the method for detecting information leakage is applied to a server, and mainly detects interface information leakage. The server is a back-end server corresponding to a front-end channel party. When the server receives an http request message sent from the channel party or returns a response packet to the channel party based on the request message, the server may detect the request message or the response packet to prevent the leakage of information.

Preferably, the server may be pre-configured with a security application for intercepting of the http request message sent from the channel party to the server and detecting information leakage, or intercepting the response packet returned by the server to the channel party based on the request message and executing the information leakage detection. That is, when the channel party sends the http request message to the server, or the server returns the response packet to the channel party, the request message and the response packet may transit through the security application.

The channel parties are tested products, including online banking, bank back office app, etc., the app may run on PC, mobile phone and other terminals. The channel party may send the request message to the server according to its usage demand, the server may receive the request message sent from the channel party, the request message includes entering account and password, logging in, sending a message, and opening an interface.

Step S20, matching a parameter included in the request message against a keyword obtained in advance through machine learning, and obtaining a matching degree between the parameter and the keyword based on the matching result.

In the present embodiment, the server may perform machine learning in advance through a preset security application to identify multiple keywords, that is, more keywords are automatically identified by machine learning in advance, for example, e-mail, email, e-mail, Email , EMAIL, etc., rather than just simply identify email only.

Specifically, in the method of machine learning, the keywords are firstly obtained through learning and recognizing a plurality of samples, such as username, Username, USERNANME, user, name and the like. Simply transformation of alphabetical case may be identified directly, for example, username, Username, UserName, etc. Common vocabularies may also be identified directly, such as username, uname, name, etc. Other cases may also be identified and matched by determining a most probable probability from a decision tree algorithm in machine learning and a probabilistic algorithm. Detailed description is given through below embodiments.

After machine learning, a plurality of keywords may be recorded. When the server receives the request message sent from the channel party, the server determines whether the request message is in plaintext or ciphertext transmission, that is, matches the parameter included in the request message against the keywords obtained in advance through machine learning, obtains the matching degree between the parameter included in the request message and the keyword obtained in advance through machine learning, so as to determine meanings of the parameter in the request message according to the matching degree. When the request message is transmitted in plaintext, the parameter included in the request message may include some terms such as Email, username, passwd, flagname and the like; when the request message is ciphertext transmission, the parameter included in the request message are some garbled characters.

Step S30, determining information of the request message is leaked and recording the related information of the request message when the matching degree is higher than a preset threshold.

After obtaining the matching degree between the parameter included in the request message and the keywords obtained in advance through machine learning, determines whether the matching degree is higher than a preset threshold, and the preset threshold may be flexibly set according to a specific situation.

When the matching degree between the keyword and the parameter is higher than the preset threshold, determines that the meanings of the parameter in the request message are the meanings corresponding to the keywords. After determining meanings of the parameter in the request message, it is determined that the parameter is transmitted in plaintext, which will be the risk of information leakage. In this case, it is determined that the information of the request message is leaked, meanwhile the related information of the request message is recorded, and the related information of the request message may be stored in a preset database. Record fields may include a request url (url is a uniform resource locator) of the request message, request sensitive parameters, a serial number and other related information. The url request is an interface address bound to the server by the channel party; the request sensitive parameters are plaintext data, which may include multiple parameters; the serial number is a sequence number for ordering the request message.

Preferably, when the server transits through the security application and when the security application detects that the data of the request message in the transmission process s plaintext transmission, the security application records the related information of the request message in the database "redis" of the security application. It should be noted that, whether the request message sent from the channel party is in plaintext or ciphertext transmission, the security application needs to transfer the request message to the back-end server.

When the matching degree between the keyword and the parameter is not higher than the preset threshold, it indicates that the meanings of the parameter in the request message may not be determined, in this case, it is determined that the request message is ciphertext transmission, and no risk of information leakage shows up. When the request message is ciphertext transmission, it is determined that the information of the request message is not leaked, and the related information of the request message does not need to be recorded.

After completing the test, the data with the security risk that stored in the database may be exported, that is, exports the related information of the request message recorded in the database, and processed by relevant security testers.

An example is described below that, when the channel party transmits the http request message to the server; the server receives the request message, wherein the parameters of the request message include Username, passwd, IDCard, and the like. The server matches the parameter included in the request message against the keywords acquired through the machine in advance and determines that the values of the Username, passwd and IDCard are transmitted in plaintext, that is, the username Username is aaaa aa, the password passwd is bbbbb, the bank card IDCard is 4205xxxxxxxxxxxx11. At this time, it is determined that the information of the request message is leaked and the related information of the request message is recorded.

The embodiment of the present disclosure obtains the matching degree between the parameter included in the request message and the keyword obtained in advance through machine learning by receiving the request message sent from the channel party and by matching the parameter included in the request message against the keyword obtained in advance through machine learning. When the matching degree between the parameter and the keyword is higher than the preset threshold, determines that the information of the request message is leaked and records the related information of the request message. Based on machine learning, more keywords can be automatically identified, allowing the sensitive information to be identified in very efficient manner, leading to reduced efforts required of security testers, improved efficiency of detecting information leakage and reduced risk of information leakage.

Further, as shown in FIG. 2, based on the first embodiment of the method for detecting information leakage, a second embodiment of the method for detecting information leakage according to the present disclosure is proposed. In the present embodiment, the above step S20 may include:
step S21, matching the parameter included in the request message with the keyword obtained in advance through machine learning, and obtaining the matching degree between the parameter and the keyword based on the matching result; and
step S22, determining the matching degree between the parameter and the keyword based on the first matching degree and a context of the parameter in the request message.

In the present embodiment, during the process by the server of matching the parameter included in the request message against the keyword obtained in advance through machine learning, firstly comparing the parameter against the keywords and determining the first matching degree between the parameter and the keyword. When multiple parameters exist, multiple parameters may be compared against each keyword respectively to determine the matching degree between each parameter and the keywords. Then, a weighted calculation is performed according to the matching degree of each parameter, to obtain the first matching degree between the multiple parameters and the keywords, and determines the matching degree between the parameter and the keyword based on the first matching degree and the context of the parameter in the request message.

An example is described below that, when the request message received by the server includes the parameter "name", the parameter "name" will be determined due to multiple trainings of determining name and account in the process of machine learning, by the probability algorithm, determines the possible probability (that is, the first matching degree) that the meaning of the parameter "name" is name is 30%, while the possible probability (that is, the first matching degree) that the meaning is account is 70%, and then according that the parameter "password" appears in the context of the request message, e.g., password, determines that the matching degree between the meaning of the parameter "name" and the keyword account is 95% by the decision tree algorithm.

In the present embodiment during the process by the server of matching the parameter included in the request message with the keyword obtained in advance through machine learning, firstly determining the first matching degree between the parameter and the keyword by the probability algorithm, then based on the first matching degree and the context of the parameter in the request message, determines the matching degree between the parameter and the keyword by the decision tree algorithm, to improve accuracy and reliability of the matching degree.

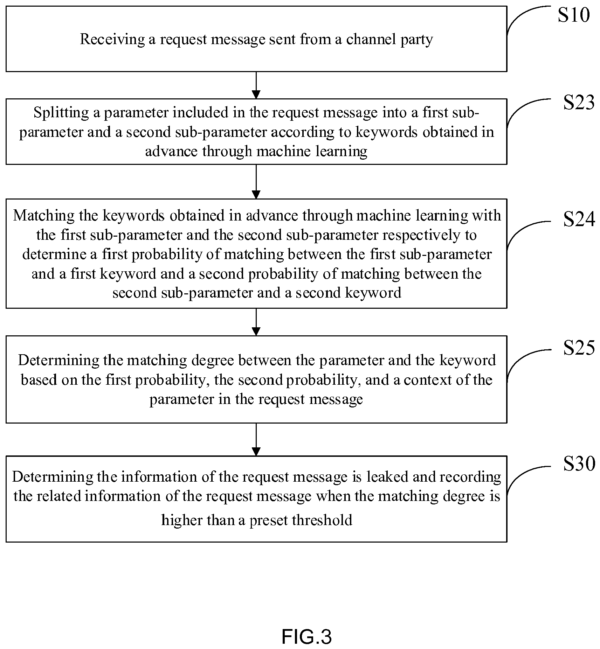

Further, as shown in FIG. 3, based on the first embodiment of the method for detecting information leakage, a third embodiment of the method for detecting information leakage according to the present disclosure is proposed. In the present embodiment, the above step S20 may further include:
step S23, splitting the parameter included in the request message into a first sub-parameter and a second sub-parameter according to keywords obtained in advance through machine learning;
step S24, matching the keywords obtained in advance through machine learning against the first sub-parameter and the second sub-parameter respectively to determine a first probability of matching between the first sub-parameter and a first keyword and a second probability of matching between the second sub-parameter and a second keyword; and
step S25, determining the matching degree between the parameter and the keyword based on the first probability, the second probability, and a context of the parameter in the request message.

In the present embodiment, during the process of matching the parameter included in the request message with the keyword obtained in advance through machine learning by the server, firstly the parameter included in the request message are split into a plurality of sub-parameters based on the keywords obtained in advance through machine learning, for example, the first sub-parameter and the second sub-parameter. Then the keywords obtained in advance through machine learning are matched with the first sub-parameter and the second sub-parameter respectively to determine a first probability of matching between the first sub-parameter and a first keyword and a second probability of matching between the second sub-parameter and a second keyword based on the probability algorithm. And then determines the matching degree between the parameter and the keyword according to the decision tree algorithm and the first probability, the second probability and the context of the parameter in the request message so as to determine the meaning of the parameter in the request message according to the matching degree.

Optionally, after determining the first probability of matching between the first sub-parameter and a first keyword and the second probability of matching between the second sub-parameter and a second keyword, a third probability of matching between the first sub-parameter and the first keyword may be calculated based on the first probability and the context of the parameter in the request message, and a fourth probability of matching between the second sub-parameter and the second keyword may be determined based on the second probability and the context of the parameter in the request message. Finally, compares the third probability against the fourth probability, the larger is set as the parameter and the keyword. And the determination of the matching degree between the parameter and the keyword may also be flexibly set according to the specific situation, which does not limit the present disclosure.

An example is described below that, when the request message received by the server includes the parameter "flagname", firstly the parameter "flagname" is split into a flag and a name, wherein the flag will be selected due to multiple trainings of determining mark and identify, the name will be selected due to multiple trainings of name and account. Through multiple algorithms, it is determined that the possible probability of the parameter "flagname" that used to mark is 40%, the possible probability of the parameter "flagname" that used to account name is 60%, and then according that the parameter "password" appears in the context of the request message, e.g., password, determines that the flagname matches the meaning of the account as 90%, that is, determines that the matching degree between the parameter "flagname" and the keyword account is 90% by the decision tree algorithm.

In the present embodiment, the server may split the parameter, and then determines the matching degree between the parameter and the keyword based on the probability algorithm, the decision tree algorithm and the context of the parameter in the request message, which may effectively identify sensitive information and improve efficiency of detecting information leakage.

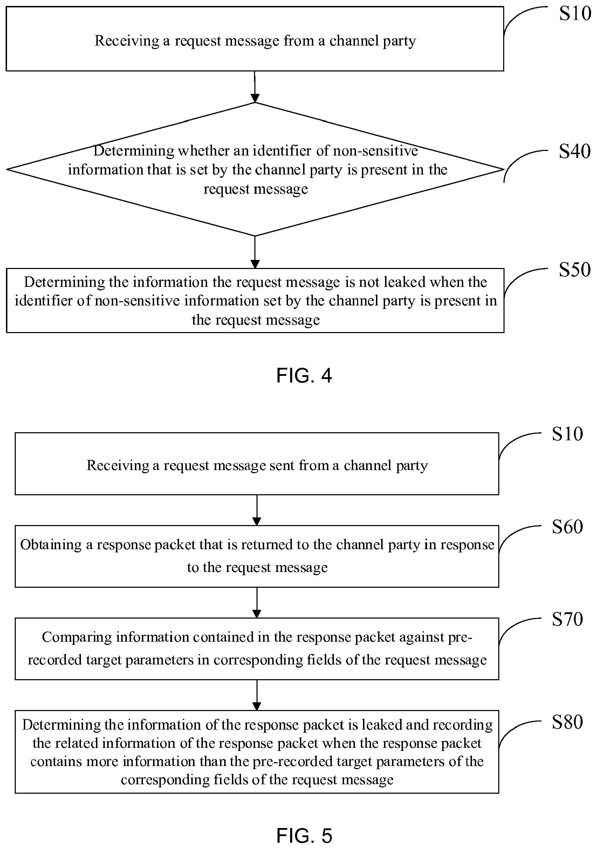

Further, as shown in FIG. 4, based on the first embodiment of the method for detecting information leakage, a fourth embodiment of the method for detecting information leakage according to the present disclosure is proposed. In the present embodiment, after step S10 include:
step S40, determining whether an identifier of non-sensitive information that is set by the channel party is present in the request message; and
step S50, determining the information of the request message is not leaked when the identifier of non-sensitive information set by the channel party is present in the request message.

It should be noted that the fourth embodiment of the method for detecting information leakage in the present disclosure may also be put forward based on the second or third embodiment of the method for detecting information leakage described above.

In the present embodiment, as some request messages are ruled to transmit in plaintext, the channel party may identify the request messages that need to be transmitted in plaintext, and set the request messages that need to be transmitted in plaintext to be non-sensitive information.

When the server receives the request message sent from the channel party, firstly judging whether the identifier of non-sensitive information that is set by the channel party is present in the request message. When the identifier of non-sensitive information that is set by the channel party is present in the request message, it is determined that the information of the request message is not leaked. Even though the request message is in plaintext, it indicates that no risk of information leakage is in the request message and not need to record the related information of the request message.

In the present embodiment, after the server receiving the request message sent from the channel party, when determines that the identifier of non-sensitive information that is set by the channel party is present, determines that the information of the request message is not leaked. It ensures that the request message with requirements may be transmitted in plaintext and improves the reliability of the information leakage detection.

Further, as shown in FIG. 5, based on the first, second, third or fourth embodiment of the method for detecting information leakage, a fifth embodiment of the method for detecting information leakage according to the present disclosure is proposed. In the present embodiment, the method for detecting information leakage further includes:
step S60, obtaining a response packet that is returned to the channel party in response to the request message;
step S70, comparing information contained in the response packet against pre-recorded target parameters in corresponding fields of the request message; and
step S80, determining the information contained in the response packet is leaked and recording the related information of the response packet when the response packet contains more information than the pre-recorded target parameters of the corresponding fields.

It should be noted that the step S60 in the fifth embodiment of the method for detecting information leakage of the present disclosure may be performed after the step S10, and may be performed after the step S20, or the step S30, or the step S40 or the step S50.

In the present embodiment, when the server receives the request message sent from the channel party and returns the response packet to the channel party according to the request message, in order to further reduce risk of information leakage, the response packet needs to be detected.

Specifically and firstly, when receiving the request message sent from the channel party, the server records the target parameters in the corresponding fields of the request message based on the request message. Then, obtains the response packet that is returned to the channel party in response to the request message; compares the information contained in the response packet against the pre-recorded target parameters in corresponding fields of the request message, and determines whether the information contained in the response packet is more than the target parameters of the fields. When the response packet contains more information than the pre-recorded target parameters of the corresponding fields, determines the information contained in the response packet is leaked and records the related information, the related information may contain more data than the target parameters. The related information of the response packet may be stored in a preset database, and the recorded fields may include the request url (url is a uniform resource locator) of the request message, the request sensitive parameters, a serial number and other related information. The url request is the interface address bound to the server by the channel party; the request sensitive parameters is data that more than the target parameters, which may include multiple parameters; the serial number is the sequence number for ordering the response packet.

Preferably, when the server returns the response packet to the channel party, the response packet may be transmitted and detected by the security application.

An example is described below that, when the channel party sends a transaction record page query to the server, the server records html page fields that need to be returned to the channel party. In here it is the page to be requested, a bank card number has not been entered for querying. The transaction record includes a transaction amount and a transaction time, the html page fields record the transaction amount and the transaction time. After that, when the channel party sends the bank card number to the server for initiating a http query request, that is, when entering a bank card number for inquiry, the server records when matching the bank card number parameter bankcard, and compares the response packet returned based on the bank card number against the recorded parameters page fields, if the parameter returned are detected more than the parameter recorded in the fields, it indicates that the server returns more information than requested by the channel party. At this time, the url request, the sensitive parameters, and the serial number are recorded in the database redis. For example, a certain page of bank website of the channel party, which is used to query the transaction record according to the bank card number input by the user, and the response packet returned by the server according to the request includes a transaction amount of 1000, a transaction time of 20160101, a transaction user of test, a transaction user bank card number xxxxx, a business name aaa; a transaction amount 400, a transaction time 20161201, a transaction user bbb, a transaction user bank card number aaaa, a business name cccc and so on, in this example what the service the channel party requested is only the transaction data, but the returned information still contains the user's identity information. If too much information is returned, it may be determined that the sensitive information may be leaked.

Finally, after completing the test, the data with the security risk that stored in the database may be exported, that is, exports the related information of the response packet recorded in the database, and processed by the relevant security testers.

In the present embodiment, the server compares the returned response packet based on the request message against the target parameters requested by the request message to determine which parameters in the response packet are more than the target parameters requested by the request message, extra parameters are related to sensitive information, and records the related information of the response packet. It is achieved that the information returned by some interfaces that not the data to be displayed on the front-end channel party page will be determined as the leakage of sensitive information, and automatic detection is also achieved to avoid manual detection, which not only improves efficiency of the detecting information leakage but also reduces risk of information leakage.

Persons of ordinary skill in the art may understand that all or part of the steps of the foregoing embodiments may be achieved by a hardware, or by instructing relevant hardware through a program, the program may be stored in a computer-readable storage medium and the computer-readable storage medium may be a read-only memory, a magnetic disk or an optical disk.

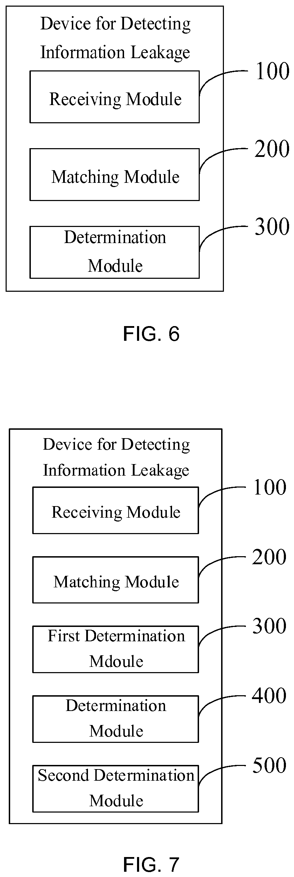

FIG. 6 shows a first embodiment of a device for detecting information leakage according to the present disclosure. The device for detecting information leakage in the embodiment includes:
a receiving module 100, configured to receive a request message sent from a channel party.

In the present embodiment, the method for detecting information leakage is applied to a server, and mainly detects interface information leakage. The server is a back-end server corresponding to a front-end channel party. When the server receives an http request message sent from the channel party or returns a response packet to the channel party based on the request message, the server may detect the request message or the response packet to prevent the leakage of information.

Preferably, the server may be pre-configured with a security application for intercepting of the http request message sent from the channel party to the server and detecting information leakage, or intercepting the response packet returned by the server to the channel party based on the request message and executing the information leakage detection. That is, when the channel party sends the http request message to the server, or the server returns the response packet to the channel party, the request message and the response packet may transit through the security application.

The channel parties are tested products, including online banking, bank back office app, etc., the app may run on PC, mobile phone and other terminals. The channel party may send the request message to the server according to its usage demand, the server may call the receiving module 100 to receive the request message sent from the channel party, the request message includes entering account and password, logging in, sending a message, and opening an interface.

A matching module 200, configured to match the parameter included in the request message with the keywords obtained in advance through machine learning, and obtain the matching degree between the parameter and the keyword based on the matching result; and
In the present embodiment, the server may perform machine learning in advance through a preset security application to identify multiple keywords, that is, more keywords are automatically identified by machine learning in advance, for example, e-mail, email, e-mail, Email , EMAIL, etc., rather than just simply identify email only.

Specifically, in the method of machine learning, the keywords are firstly acquired through learning and recognizing a plurality of samples, such as username, Username, USERNANME, user, name and the like. Simply transformation of alphabetical case may be identified directly, for example, username, Username, UserName, etc. Common vocabularies may also be identified directly, such as username, uname, name, etc. Other cases may also be identified and matched by determining a most probable probability from a decision tree algorithm in machine learning and a probabilistic algorithm. Detailed description is given through below embodiments.

After machine learning, a plurality of keywords may be recorded. When the server receives the request message sent from the channel party, the server determines whether the request message is in plaintext or ciphertext transmission, that is, matches the parameter included in the request message with the keywords obtained in advance through machine learning, obtains the matching degree between the parameter included in the request message and the keywords obtained in advance through machine learning, so as to determine meanings of the parameter in the request message according to the matching degree. When the request message is transmitted in plaintext, the parameter included in the request message may include some terms such as Email, username, passwd, flagname and the like; when the request message is ciphertext transmission, the parameter included in the request message are some garbled characters.

A first determination module 300, configured to determine the information of the request message is leaked and record the related information of the request message when the matching degree is higher than the preset threshold.

After obtaining the matching degree between the parameter included in the request message and the keywords obtained in advance through machine learning, determines whether the matching degree is higher than a preset threshold, and the preset threshold may be flexibly set according to a specific situation.

When the matching degree between the keyword and the parameter is higher than the preset threshold, the first determination module 300 determines that the meanings of the parameter in the request message are the meanings corresponding to the keywords. After determining meanings of the parameter in the request message, it is determined that the parameter is transmitted in plaintext, which will be the risk of information leakage. In this case, it is determined that the information of the request message is leaked, meanwhile the related information of the request message is recorded, and the related information of the request message may be stored in a preset database. Record fields may include a request url (url is a uniform resource locator) of the request message, request sensitive parameters, a serial number and other related information. The url request is an interface address bound to the server by the channel party; the request sensitive parameters are plaintext data, which may include multiple parameters; the serial number is a sequence number for ordering the request message.

Preferably, when the server transits through the security application and when the security application detects that the data of the request message in the transmission process s plaintext transmission, the security application records the related information of the request message in the database redis of the security application. It should be noted that, whether the request message sent from the channel party is in plaintext or ciphertext transmission, the security application needs to transfer the request message to the back-end server.

When the matching degree between the keyword and the parameter is not higher than the preset threshold, it indicates that the meanings of the parameter in the request message may not be determined, in this case, it is determined that the request message is ciphertext transmission, and no risk of information leakage exists. When the request message is ciphertext transmission, it is determined that the information of the request message is not leaked, and the related information of the request message does not need to be recorded.

After completing the test, the data with the security risk that stored in the database may be exported, that is, exports the related information of the request message recorded in the database, and processed by relevant security testers.

An example is described below that, when the channel party transmits the http request message to the server; the server receives the request message, wherein the parameter of the request message includes Username, passwd, IDCard, and the like. The server matches the parameter included in the request message with the keywords acquired through the machine in advance and determines that the values of the Username, passwd and IDCard are transmitted in plaintext, that is, the username Username is aaaa aa, the password passwd is bbbbb, the bank card IDCard is 4205xxxxxxxxxxxx11. At this time, it is determined that the information of the request message is leaked and the related information of the request message is recorded.

The embodiment of the present disclosure obtains the matching degree between the parameter included in the request message and the keywords obtained in advance through machine learning by receiving the request message sent from the channel party and by matching the parameter included in the request message with the keywords obtained in advance through machine learning. When the matching degree between the parameter and the keyword is higher than the preset threshold, determines that the information of the request message is leaked and records the related information of the request message. Based on machine learning, more keywords can be automatically identified, allowing the sensitive information to be identified in very efficient manner, leading to reduced efforts required of security testers, improved efficiency of detecting information leakage and reduced risk of information leakage.

Further, based on the first embodiment of the device for detecting information leakage, a second embodiment of the device for detecting information leakage according to the present disclosure is proposed. In the present embodiment, the above matching module 200 may include:
a first determining unit, configured to match the parameter included in the request message with the keywords obtained in advance through machine learning, and determine a first matching degree between the parameter and the keyword; and
a second determining unit, configured to determine the matching degree between the parameter and the keyword based on the first matching degree and the context of the parameter in the request message.

In the present embodiment, during the process by the server of matching the parameter included in the request message with the keywords obtained in advance through machine learning, firstly the first determining unit comparing the parameter against the keywords and determining the first matching degree between the parameter and the keyword. When multiple parameters exist, multiple parameters may be compared against each keyword respectively to determine the first matching degree between each parameter and the keywords. Then, a weighted calculation is performed by the second determining unit according to the matching degree of each parameter, to obtain the first matching degree between the multiple parameters and the keywords, and determines the matching degree between the parameter and the keyword based on the first matching degree and the context of the parameter in the request message.

An example is described below that, when the request message received by the server includes the parameter "name", the parameter "name" will be determined due to multiple trainings of determining name and account in the process of machine learning, by the probability algorithm, determines the possible probability (that is, the first matching degree) that the meaning of the parameter "name" is name is 30%, while the possible probability (that is, the first matching degree) that the meaning is account is 70%, and then according that the parameter "password" appears in the context of the request message, e.g., password, determines that the matching degree between the meaning of the parameter "name" and the keyword account is 95% by the decision tree algorithm.

In the present embodiment during the process by the server of matching the parameter included in the request message with the keywords obtained in advance through machine learning, firstly determining the first matching degree between the parameter and the keyword by the probability algorithm, then based on the first matching degree and the context of the parameter in the request message, determines the matching degree between the parameter and the keyword by the decision tree algorithm, to improve accuracy and reliability of the matching degree.

Further, based on the first embodiment of the device for detecting information leakage, a thirdly embodiment of the device for detecting information leakage according to the present disclosure is proposed. In the present embodiment, the above matching module 200 also may include:
a splitting unit, configured to split the parameter included in the request message into the first sub-parameter and the second sub-parameter according to the keywords obtained in advance through machine learning;
a matching unit, configured to match the keywords obtained in advance through machine learning against the first sub-parameter and the second sub-parameter respectively to determines the first probability of matching between the first sub-parameter and the first keyword and the second probability of matching between the second sub-parameter and the second keyword; and
a third determining unit, configured to determine the matching degree between the parameter and the keyword based on the first probability, the second probability and the context of the parameter in the request message.

In the present embodiment, during the process of matching the parameter included in the request message against the keywords obtained in advance through machine learning by the server, firstly the parameter included in the request message are split by the splitting unit into a plurality of sub-parameters based on the keywords obtained in advance through machine learning, for example, the first sub-parameter and the second sub-parameter. Then the keywords obtained in advance through machine learning are matched by the matching unit with the first sub-parameter and the second sub-parameter respectively, and based on the probability algorithm, the third determining unit determines the first probability of matching between the first sub-parameter and the first keyword and the second probability of matching between the second sub-parameter and the second keyword. And then determines the matching degree between the parameter and the keyword according to the decision tree algorithm and the first probability, the second probability and the context of the parameter in the request message so as to determine the meaning of the parameter in the request message according to the matching degree.

Optionally, after determining the first probability of matching between the first sub-parameter and the first keyword and the second probability of matching between the second sub-parameter and the second keyword, a third probability matched by the first sub-parameter and the first keyword may be calculated based on the first probability and the context of the parameter in the request message, and a fourth probability matched by the second sub-parameter and the second keyword may be determined based on the second probability and the context of the parameter in the request message. Finally, compares the third probability against the fourth probability, the larger is set as the parameter and the keyword. And the determination of the matching degree between the parameter and the keyword may also be flexibly set according to the specific situation, which does not limit the present disclosure.

An example is described below that, when the request message received by the server includes the parameter "flagname", firstly the parameter "flagname" is split into a flag and a name, wherein the flag will be selected due to multiple trainings of determining mark and identify, the name will be selected due to multiple trainings of name and account. Through multiple algorithms, it is determined that the possible probability of the parameter "flagname" that used to mark is 40%, the possible probability of the parameter "flagname" that used to account name is 60%, and then according that the parameter "password" appears in the context of the request message, e.g., password, determines that the flagname matches the meaning of the account as 90%, that is, determines that the matching degree between the parameter "flagname" and the keyword account is 90% by the decision tree algorithm.

In the present embodiment, the server may split the parameter, and then determines the matching degree between the parameter and the keyword based on the probability algorithm, the decision tree algorithm and the context of the parameter in the request message, which may effectively identify sensitive information and improve efficiency of detecting information leakage.

Further, as shown in FIG. 7, based on the first embodiment of the device for detecting information leakage, a fourth embodiment of the device for detecting information leakage according to the present disclosure is proposed. In the present embodiment, the device for detecting information leakage also includes:
a determination module 400, configured to determine whether a identifier of non-sensitive information that is set by the channel party is present in the request message; and
a second determination module 500, configured to determine the information of the request message is not leaked when the identifier of non-sensitive information set by the channel party is present.

It should be noted that the fourth embodiment of the device for detecting information leakage in the present disclosure may also be put forward based on the second or third embodiment of the device for detecting information leakage described above.

In the present embodiment, as some request messages are ruled to transmit in plaintext, the channel party may identify the request messages that need to be transmitted in plaintext, and set the request messages that need to be transmitted in plaintext to be non-sensitive information.

When the server receives the request message sent from the channel party, firstly the determination module 400 determines whether the identifier of non-sensitive information that is set by the channel party is present in the request message. When the identifier of non-sensitive information that is set by the channel party is present in the request message, the second determination module 500 determines that the information of the request message is not leaked. Even though the request message is in plaintext, it indicates that no risk of information leakage is in the request message and not need to record the related information of the request message.

In the present embodiment, after the server receiving the request message sent from the channel party, when determines that the identifier of non-sensitive information that is set by the channel party is present, determines that the information of the request message is not leaked. It ensures that the request message with requirements may be transmitted in plaintext and improves the reliability of the information leakage detection.

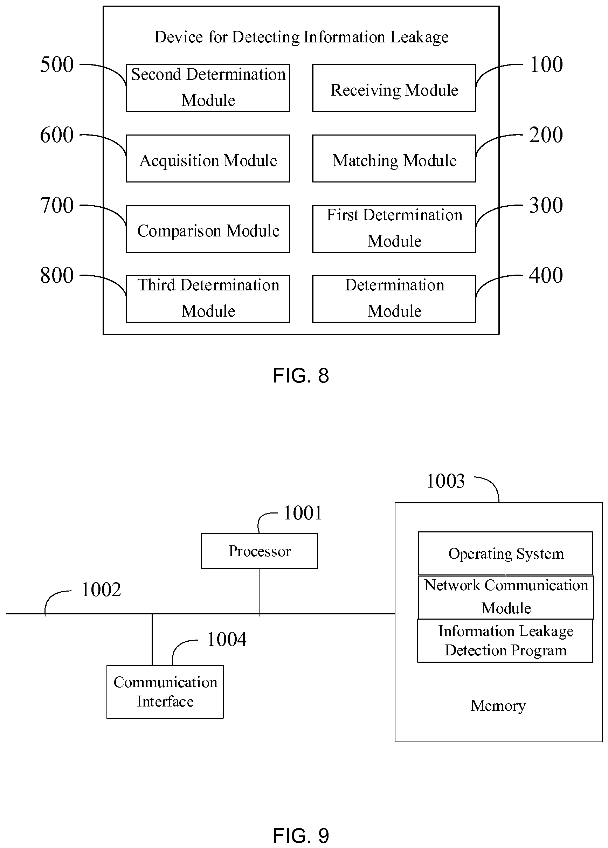

Further, as shown in FIG. 8, based on the first embodiment, the second embodiment, the third embodiment or the fourth embodiment of the device for detecting information leakage, a fifth embodiment of the device for detecting information leakage according to the present disclosure is proposed. In the present embodiment, the device for detecting information leakage further includes:
an acquisition module 600, configured to obtain a response packet that is returned to the channel party in response to the request message;
a comparison module 700, configured to compare information contained in the response packet against pre-recorded target parameters in corresponding fields of the request message; and
a third determination module 800, configured to determine the information contained in the response packet is leaked and record the related information of the response packet when the response packet contains more information than the pre-recorded target parameters of the corresponding fields.

In the present embodiment, when the server receives the request message sent from the channel party and returns the response packet to the channel party according to the request message, in order to further reduce risk of information leakage, the response packet needs to be detected.

Specifically and firstly, when receiving the request message sent from the channel party, the server records the target parameters in the corresponding fields of the request message based on the request message. Then the server calls the acquisition module 600 to obtain the response packet that is returned to the channel party in response to the request message; the comparison module 700 compares the information contained in the response packet against the pre-recorded target parameters in corresponding fields of the request message, and determines whether the response packet contains more information than the pre-recorded target parameters of the corresponding fields. When the response packet contains more information than the pre-recorded target parameters of the corresponding fields, the third determination module 800 determines the information contained in the response packet is leaked and records the related information; the related information may contain more data than the target parameters. The related information of the response packet may be stored in a preset database, and the recorded fields may include the request url (url is a uniform resource locator) of the request message, the request sensitive parameters, a serial number and other related information. The url request is the interface address bound to the server by the channel party; the request sensitive parameters is data that more than the target parameters, which may include multiple parameters; the serial number is the sequence number for ordering the response packet.

Preferably, when the server returns the response packet to the channel party, the response packet may be transmitted and detected by the security application.

An example is described below that, when the channel party sends a transaction record page query to the server, the server records html page fields that need to be returned to the channel party. In here it is the page to be requested, a bank card number has not been entered for querying. The transaction record includes a transaction amount and a transaction time, the html page fields record the transaction amount and the transaction time. After that, when the channel party sends the bank card number to the server for initiating a http query request, that is, when entering a bank card number for inquiry, the server records when matching the bank card number parameter bankcard, and compares the response packet returned based on the bank card number against the recorded parameters page fields, if the parameter returned are detected more than the parameter recorded in the fields, it indicates that the server returns more information than requested by the channel party. At this time, the url request, the sensitive parameters, and the serial number are recorded in the database redis. For example, a certain page of bank website of the channel party, which is used to query the transaction record according to the bank card number input by the user, and the response packet returned by the server according to the request includes a transaction amount of 1000, a transaction time of 20160101, a transaction user of test, a transaction user bank card number xxxxx, a business name aaa; a transaction amount 400, a transaction time 20161201, a transaction user bbb, a transaction user bank card number aaaa, a business name cccc and so on, in this example what the service the channel party requested is only the transaction data, but the returned information still contains the user's identity information. If too much information is returned, it may be determined that the sensitive information may be leaked.

Finally, after completing the test, the data with the security risk that stored in the database may be exported, that is, exports the related information of the response packet recorded in the database, and processed by the relevant security testers.

In the present embodiment, the server compares the returned response packet based on the request message against the target parameters requested by the request message to determine which parameters in the response packet are more than the target parameters requested by the request message, extra parameters are related to sensitive information, and records the related information of the response packet. It is achieved that the information returned by some interfaces that not the data to be displayed on the front-end channel party page will be determined as the leakage of sensitive information, and automatic detection is also achieved to avoid manual detection, which not only improves efficiency of detecting information leakage but also reduces risk of information leakage.

In terms of hardware implementation, the receiving module 100, the matching module 200 and the first determination module 300 may be embedded in the device for detecting information leakage or independently of the device in form of hardware, or may be stored in the memory of the device for detecting information leakage in form of software, for the processor to perform the operations corresponding to the above modules. The processor may be a central processing unit (CPU), a microprocessor, a microcontroller, or the like.

FIG. 9 shows a structural diagram of a hardware execution environment of the server related to the embodiments of the present disclosure.

As shown in FIG. 9, the server may include a processor 1001, a communication bus 1002, a memory 1003, and a communication interface 1004. The communication bus 1002 is used to implement connection and communication among above components. The memory 1003 may be a high-speed RAM memory or a non-volatile memory (non-volatile memory) such as a disk memory. Optionally, the memory 1003 may also be a storage device independent of the processor 1001. The communication interface 1004 may include a user interface (not shown in FIG. 9) and/or a network interface (not shown in FIG. 9), wherein, the user interface may be used to connect input/output devices such as a display screen and a keyboard, the network interface may be used to connect to a network, including a wired network and/or a wireless network.

Those skilled in the art may understand that the structure of the server shown in FIG. 9 does not constitute a limitation on the server, and may include more or fewer components than above illustrated, or combine some components or different components.

As shown in FIG. 9, as a computer storage medium, the memory 1003 may include an operating system, a network communication module, and an information leakage detection program.

In the server shown in FIG. 9, the processor 1001 may be configured to call the information leakage detection program stored in the memory 1003 and perform the following operations:
receiving the request message sent from the channel party;
matching a parameter included in the request message against a keyword obtained in advance through machine learning, and obtaining a matching degree between the parameter and the keyword based on the matching result; and
determining information of the request message is leaked and recording related information of the request message when the matching degree is higher than a preset threshold.

Further, the processor 1001 may execute the information leakage detection program stored in the memory 1003 to realize the following operations:
matching parameters included in the request message against the keyword obtained in advance through machine learning and obtaining the first matching degree between the parameter and the keyword; and
determining the matching degree between the parameter and the keyword based on the first matching degree and the context of the parameter in the request message.

Further, the processor 1001 may execute the information leakage detection program stored in the memory 1003 to realize the following operations:
splitting the parameter included in the request message into the first sub-parameter and the second sub-parameter according to the keywords obtained in advance through machine learning;
matching the keywords obtained in advance through machine learning against the first sub-parameter and the second sub-parameter respectively to determines the first probability of matching between the first sub-parameter and the first keyword and the second probability of matching between the second sub-parameter and the second keyword; and
determining the matching degree between the parameter and the keyword based on the first probability, the second probability and the context of the parameter in the request message.

Further, the processor 1001 may execute the information leakage detection program stored in the memory 1003 to realize the following operations:
determining whether the identifier of non-sensitive information that is set by the channel party is present in the request message; and
determining that information of the request message is not leaked when the identifier of non-sensitive information that is set by the channel party is present.

Further, the processor 1001 may execute the information leakage detection program stored in the memory 1003 to realize the following operations:
obtaining the response packet that is returned to the channel party in response to the request message;
comparing the information contained in the response packet against the pre-recorded target parameters in corresponding fields of the request message, and
determining the information contained in the response packet is leaked when the response packet contains more information than the pre-recorded target parameters of the corresponding fields, and recording the related information of the response packet.

The embodiment of the present disclosure obtains the matching degree between the parameter included in the request message and the keywords obtained in advance through machine learning by receiving the request message sent from the channel party and by matching the parameter included in the request message with the keywords obtained in advance through machine learning. When the matching degree between the parameter and the keyword is higher than the preset threshold, determines that the information of the request message is leaked and records the related information of the request message. Based on machine learning, more keywords can be automatically identified, allowing the sensitive information to be identified in very efficient manner, leading to reduced efforts required of security testers, improved efficiency of detecting information leakage and reduced risk of information leakage.

The disclosure provides a computer-readable storage medium, which stores one or more programs, the one or more programs may be executed by one or more processors, to perform the following operations:
receiving a request message sent from a channel party;
matching a parameter included in the request message against a keyword obtained in advance through machine learning, and obtaining a matching degree between the parameter and the keyword based on the matching result; and
determining information of the request message is leaked and recording related information of the request message when the matching degree is higher than a preset threshold.

Preferably, the computer-readable storage medium storage also configured to achieve the operations of matching the parameter included in the request message with the keywords obtained in advance through machine learning, and obtaining the matching degree between the parameter and the keyword based on the matching result:
matching the parameter included in the request message against the keyword obtained in advance through machine learning, and obtaining the first matching degree between the parameter and the keyword; and
determining the matching degree between the parameter and the keyword based on the first matching degree and the context of the parameter in the request message.

Preferably, the computer-readable storage medium storage also configured to achieve the operations of matching the parameter included in the request message against the keyword obtained in advance through machine learning and obtaining the matching degree between the parameter and the keyword based on the matching result:
splitting the parameter included in the request message into the first sub-parameter and the second sub-parameter according to the keywords obtained in advance through machine learning;
matching the keywords obtained in advance through machine learning against the first sub-parameter and the second sub-parameter respectively to determines the first probability of matching between the first sub-parameter and the first keyword and the second probability of matching between the second sub-parameter and the second keyword; and
determining the matching degree between the parameter and the keyword based on the first probability, the second probability and the context of the parameter in the request message.

Preferably, the computer-readable storage medium storage also configured to achieve the operations after receiving the request message sent from the channel party:
determining whether the identifier of non-sensitive information that is set by the channel party is present in the request message; and
determining that the information of the request message is not leaked when the identifier of non-sensitive information that is set by the channel party is present.

Preferably, the computer-readable storage medium storage also configured to perform the following operations:
obtaining the response packet that is returned to the channel party in response to the request message;
comparing information contained in the response packet against pre-recorded target parameters in corresponding fields of the request message; and
determining the information contained in the response packet is leaked and recording the related information of the response packet when the response packet contains more information than the pre-recorded target parameters of the corresponding fields.

Persons of ordinary skill in the art may understand that all or part of the operations of the foregoing embodiments may be achieved by a hardware, or by instructing relevant hardware through a program, the program may be stored in a computer-readable storage medium and the computer-readable storage medium may be a read-only memory, a magnetic disk or an optical disk.

It should also be noted that the terms "comprising"., "including" or any other variants used herein is intended to encompass a non-exclusive inclusion, such that the process, the method, the article or the device of that comprising a series of elements is not only comprise the above elements, but also comprise other elements not explicitly listed., or further comprise elements inherent to the process, the method, the article or the device. Under the condition that no more limitation exists, the description "comprising a" limits an element, which is not excluded that the process, the method, the article or the device comprised the element may further comprise other same elements.

The serial numbers of the embodiments of the present disclosure are only for description, and do not represent the advantages and disadvantages of the embodiments.

Through the above description of the embodiments, those skilled in the art may clearly understand that the above-mentioned method In the present embodiments may be implemented by means of software plus a necessary universal hardware platform, the hardware may also be used, but in many cases, the former is the better implementation. Based on this understanding, the technical solution of the present disclosure essentially, or the part contributing to the prior art, may be embodied in the form of a software product stored on a storage medium (such as a ROM/RAM, a magnetic disk, an optical disc), several instructions are included to enable a server to execute the method according to each embodiment of the present disclosure.

The forgoing description is merely preferred embodiments of the present disclosure and does not limit the patent scope of the present disclosure, any equivalent structure or equivalent process modification used according to the contents of the specification and accompanying drawings in the present disclosure, no matter whether it is directly or indirectly used in any other related technical field, should be included within the protection scope of the present disclosure.

## Claims

1. A method for detecting information leakage, comprising:
receiving (S10) a request message sent from a channel party;
matching (S20) a parameter included in the request message against a keyword obtained in advance through machine learning, and obtaining a matching degree between the parameter and the keyword based on the matching result; and
determining (S30) information of the request message is leaked and recording related information of the request message when the matching degree is higher than a preset threshold;
**characterized by** the operation of matching (S20) a parameter included in the request message against a keyword obtained in advance through machine learning, and obtaining a matching degree between the parameter and the keyword based on the matching result comprising:
matching (S21) the parameter included in the request message against the keyword obtained in advance through machine learning, to determine a plurality of first matching degrees between the parameter and the keyword, wherein the plurality of first matching degrees respectively correspond to a plurality of meanings of the parameter; and
determining (S22) the matching degree between the parameter and the keyword based on the plurality of first matching degrees and a context of the parameter in the request message.

2. The method according to claim 1, wherein matching (S21) the parameter included in the request message against the keyword obtained in advance through machine learning and obtaining the matching degree between the parameter and the keyword comprises:
splitting (S23) the parameter included in the request message into a first sub-parameter and a second sub-parameter according to keywords obtained in advance through machine learning;
matching (S24) the keywords obtained in advance through machine learning against the first sub-parameter and the second sub-parameter respectively to determine a first probability of matching between the first sub-parameter and a first keyword and a second probability of matching between the second sub-parameter and a second keyword; and
determining (S25) the matching degree between the parameter and the keyword based on the first probability, the second probability, and a context of the parameter in the request message.

3. The method according to claim 1, further comprising, subsequent to receiving (S10) the request message sent from the channel party:
determining (S40) whether an identifier of non-sensitive information that is set by the channel party is present in the request message; and
determining (S50) the information of the request message is not leaked when the identifier of non-sensitive information set by the channel party is present in the request message.

4. The method according to claim 1, further comprising:
obtaining (S60) a response packet that is returned to the channel party in response to the request message;
comparing (S70) information contained in the response packet against pre-recorded target parameters in corresponding fields of the request message; and
determining (S80) the information contained in the response packet is leaked and recording the related information of the response packet when the response packet contains more information than the pre-recorded target parameters of the corresponding fields.

5. The method according to claim 1, further comprising:
obtaining a response packet that is returned to the channel party in response to the request message;
comparing information contained in the response packet against pre-recorded target parameters of corresponding fields of the request message; and
determining the information contained in the response packet is leaked and recording the related information of the response packet when the response packet contains more information than the pre-recorded target parameters of the corresponding fields.

6. A server comprising a memory storing an information leakage detection program and a processor configured to execute the information leakage detection program to perform the following operations:
receiving (S10) a request message sent from a channel party;
matching (S20) a parameter included in the request message against a keyword obtained in advance through machine learning, and obtaining a matching degree between the parameter and the keyword based on the matching result; and
determining (S30) information of the request message is leaked and recording related information of the request message when the matching degree is higher than a preset threshold;
**characterized by** the operation of matching (S20) a parameter included in the request message against a keyword obtained in advance through machine learning, and obtaining a matching degree between the parameter and the keyword based on the matching result comprising:
matching (S21) the parameter included in the request message against the keyword obtained in advance through machine learning, to determine a plurality of first matching degrees between the parameter and the keyword, wherein the plurality of first matching degrees respectively correspond to a plurality of meanings of the parameter; and
determining (S22) the matching degree between the parameter and the keyword based on the plurality of first matching degrees and a context of the parameter in the request message.

7. The server according to claim 6, wherein the processor is configured to execute the information leakage detection program stored in the memory to perform the operations of matching (S21) the parameter included in the request message against the keyword obtained in advance through machine learning and obtaining the matching degree between the parameter and the keyword, by:
splitting (S23) the parameter included in the request message into a first sub-parameter and a second sub-parameter according to keywords obtained in advance through machine learning;
matching (S24) the keywords obtained in advance through machine learning against the first sub-parameter and the second sub-parameter respectively to determine a first probability of matching between the first sub-parameter and a first keyword and a second probability of matching between the second sub-parameter and a second keyword; and
determining (S25) the matching degree between the parameter and the keyword based on the first probability, the second probability, and a context of the parameter in the request message.

8. The server according to claim 6, wherein the processor is configured to execute the information leakage detection program stored in the memory to further perform the following operations subsequent to receiving (S10) the request message sent from the channel party:
determining (S40) whether an identifier of non-sensitive information that is set by the channel party is present in the request message; and
determining (S50) the information of the request message is not leaked when the identifier of non-sensitive information set by the channel party is present in the request message.

9. The server according to claim 6, wherein the processor is configured to execute the information leakage detection program stored in the memory to further perform the following operations:
obtaining (S60) a response packet that is returned to the channel party in response to the request message;
comparing (S70) information contained in the response packet against pre-recorded target parameters in corresponding fields of the request message; and
determining (S80) the information contained in the response packet is leaked and recording the related information of the response packet when the response packet contains more information than the pre-recorded target parameters of the corresponding fields.

10. A computer-readable storage medium storing one or more programs that when executed by one or more processors cause the following operations to be performed:
receiving (S10) a request message sent from a channel party;
matching (S20) a parameter included in the request message against a keyword obtained in advance through machine learning, and obtaining a matching degree between the parameter and the keyword based on the matching result; and
determining (S30) information of the request message is leaked and recording related information of the request message when the matching degree is higher than a preset threshold;
**characterized by** the operation of matching (S20) a parameter included in the request message against a keyword obtained in advance through machine learning, and obtaining a matching degree between the parameter and the keyword based on the matching result comprising:
matching (S21) the parameter included in the request message against the keyword obtained in advance through machine learning, to determine a plurality of first matching degrees between the parameter and the keyword, wherein the plurality of first matching degrees respectively correspond to a plurality of meanings of the parameter; and
determining (S22) the matching degree between the parameter and the keyword based on the plurality of first matching degrees and a context of the parameter in the request message.

11. The computer-readable storage medium according to claim 10, wherein the one or more programs when executed by the one or more processors cause the following operations to be performed in matching the parameter included in the request message against the keyword obtained in advance through machine learning and obtaining the matching degree between the parameter and the keyword:
splitting (S23) the parameter included in the request message into a first sub-parameter and a second sub-parameter according to keywords obtained in advance through machine learning;
matching (S24) the keywords obtained in advance through machine learning against the first sub-parameter and the second sub-parameter respectively to determine a first probability of matching between the first sub-parameter and a first keyword and a second probability of matching between the second sub-parameter and a second keyword; and
determining (S25) the matching degree between the parameter and the keyword based on the first probability, the second probability, and a context of the parameter in the request message.

12. The computer-readable storage medium according to claim 10, the one or more programs when executed by the one or more processors further cause the following operations to be performed subsequent to receiving the request message sent from the channel party:
determining (S40) whether an identifier of non-sensitive information that is set by the channel party is present in the request message; and
determining (S50) the information of the request message is not leaked when the identifier of non-sensitive information set by the channel party is present in the request message.

13. The computer-readable storage medium according to claim 10, wherein the one or more programs when executed by the one or more processors further cause the following operations to be performed:
obtaining (S60) a response packet that is returned to the channel party in response to the request message;
comparing (S70) information contained in the response packet against pre-recorded target parameters in corresponding fields of the request message; and
determining (S80) the information contained in the response packet is leaked and recording the related information of the response packet when the response packet contains more information than the pre-recorded target parameters of the corresponding fields.

## Patentansprüche

1. Verfahren zum Erkennen eines Datenlecks, umfassend:
Empfangen (S10) einer Anforderungsnachricht, die von einer Kanalpartei gesendet wird;
Abgleichen (S20) eines Parameters, der in der Anforderungsnachricht enthalten ist, mit einem Schlüsselwort, das im Voraus durch maschinelles Einlernen erlangt wurde, und Erlangen eines Übereinstimmungsgrads zwischen dem Parameter und dem Schlüsselwort auf Grundlage des Abgleichergebnisses; und
Bestimmen (S30), dass ein Leck der Daten der Anforderungsnachricht stattgefunden hat, und Aufzeichnen zugehöriger Daten der Anforderungsnachricht, wenn der Übereinstimmungsgrad höher als ein voreingestellten Schwellenwert ist;
**dadurch gekennzeichnet, dass** der Vorgang des Abgleichens (S20) eines Parameters, der in der Anforderungsnachricht enthalten ist, mit einem Schlüsselwort, das im Voraus durch maschinelles Einlernen erlangt wurde, und Erlangen eines Übereinstimmungsgrads zwischen dem Parameter und dem Schlüsselwort auf Grundlage des Abgleichergebnisses umfasst:
Abgleichen (S21) des Parameters, der in der Anforderungsnachricht enthalten ist, mit dem Schlüsselwort, das im Voraus durch maschinelles Einlernen erlangt wurde, um eine Vielzahl von ersten Übereinstimmungsgraden zwischen dem Parameter und dem Schlüsselwort zu bestimmen, wobei die Vielzahl von ersten Übereinstimmungsgraden jeweils einer Vielzahl von Bedeutungen der Parameter entspricht; und
Bestimmen (S22) des Übereinstimmungsgrads zwischen dem Parameter und dem Schlüsselwort auf Grundlage der Vielzahl von ersten Übereinstimmungsgraden und eines Kontexts des Parameters in der Anforderungsnachricht.

2. Verfahren nach Anspruch 1, wobei das Abgleichen (S21) des Parameters, der in der Anforderungsnachricht enthalten ist, mit dem Schlüsselwort, das im Voraus durch maschinelles Einlernen erlangt wurde, und Erlangen des Übereinstimmungsgrads zwischen dem Parameter und dem Schlüsselwort umfasst:
Teilen (S23) des Parameters, der in der Anforderungsnachricht enthalten ist, in einen ersten Subparameter und einen zweiten Subparameter gemäß Schlüsselwörtern, die im Voraus durch maschinelles Einlernen erlangt wurden;
Abgleichen (S24) der Schlüsselwörter, die im Voraus durch maschinelles Einlernen erlangt wurden, jeweils mit dem ersten Subparameter und dem zweiten Subparameter, um eine erste Wahrscheinlichkeit der Übereinstimmung zwischen dem ersten Subparameter und einem ersten Schlüsselwort und eine zweite Wahrscheinlichkeit der Übereinstimmung zwischen dem zweiten Subparameter und einem zweiten Schlüsselwort zu bestimmen; und
Bestimmen (S25) des Übereinstimmungsgrads zwischen dem Parameter und dem Schlüsselwort auf Grundlage der ersten Wahrscheinlichkeit, der zweiten Wahrscheinlichkeit und eines Kontexts des Parameters in der Anforderungsnachricht.

3. Verfahren nach Anspruch 1, ferner umfassend nach dem Empfangen (S10) der Anforderungsnachricht, die von der Kanalpartei gesendet wird:
Bestimmen (S40), ob eine Kennung von nichtvertraulichen Daten, die durch die Kanalpartei eingestellt wurde, in der Anforderungsnachricht vorhanden ist; und
Bestimmen (S50), dass kein Leck von Daten der Anforderungsnachricht stattgefunden hat, wenn die Kennung der nichtvertraulichen Daten, die durch die Kanalpartei eingestellt wurde, in der Anforderungsnachricht vorhanden ist.

4. Verfahren nach Anspruch 1, ferner umfassend:
Erlangen (S60) eines Antwortpakets, das als Antwort auf die Anforderungsnachricht an die Kanalpartei zurückgegeben wird;
Vergleichen (S70) von Daten, die in dem Antwortpaket enthalten sind, mit im Voraus aufgezeichneten Zielparametern in entsprechenden Feldern der Anforderungsnachricht; und
Bestimmen (S80), dass ein Leck der in dem Antwortpaket enthaltenen Daten stattgefunden hat, und Aufzeichnen der zugehörigen Daten des Antwortpakets, wenn das Antwortpaket mehr Daten als die im Voraus aufgezeichneten Zielparameter der entsprechenden Felder enthält.

5. Verfahren nach Anspruch 2, ferner umfassend:
Erlangen eines Antwortpakets, das als Antwort auf die Anforderungsnachricht an die Kanalpartei zurückgegeben wird;
Vergleichen von Daten, die in dem Antwortpaket enthalten sind, mit im Voraus aufgezeichneten Zielparametern in entsprechenden Feldern der Anforderungsnachricht; und
Bestimmen, dass ein Leck der in dem Antwortpaket enthaltenen Daten stattgefunden hat, und Aufzeichnen der zugehörigen Daten des Antwortpakets, wenn das Antwortpaket mehr Daten als die im Voraus aufgezeichneten Zielparameter der entsprechenden Felder enthält.

6. Server, umfassend einen Speicher, in dem ein Datenleckerkennungsprogramm gespeichert ist, und einen Prozessor, der dazu konfiguriert ist, das Datenleckerkennungsprogramm auszuführen, um die folgenden Vorgänge durchzuführen:
Empfangen (S10) einer Anforderungsnachricht, die von einer Kanalpartei gesendet wird;
Abgleichen (S20) eines Parameters, der in der Anforderungsnachricht enthalten ist, mit einem Schlüsselwort, das im Voraus durch maschinelles Einlernen erlangt wurde, und Erlangen eines Übereinstimmungsgrads zwischen dem Parameter und dem Schlüsselwort auf Grundlage des Abgleichergebnisses; und
Bestimmen (S30), dass ein Leck der Daten der Anforderungsnachricht stattgefunden hat, und Aufzeichnen zugehöriger Daten der Anforderungsnachricht, wenn der Übereinstimmungsgrad höher als ein voreingestellten Schwellenwert ist;
**dadurch gekennzeichnet, dass** der Vorgang des Abgleichens (S20) eines Parameters, der in der Anforderungsnachricht enthalten ist, mit einem Schlüsselwort, das im Voraus durch maschinelles Einlernen erlangt wurde, und Erlangen eines Übereinstimmungsgrads zwischen dem Parameter und dem Schlüsselwort auf Grundlage des Abgleichergebnisses umfasst:
Abgleichen (S21) des Parameters, der in der Anforderungsnachricht enthalten ist, mit dem Schlüsselwort, das im Voraus durch maschinelles Einlernen erlangt wurde, um eine Vielzahl von ersten Übereinstimmungsgraden zwischen dem Parameter und dem Schlüsselwort zu bestimmen, wobei die Vielzahl von ersten Übereinstimmungsgraden jeweils einer Vielzahl von Bedeutungen der Parameter entspricht; und
Bestimmen (S22) des Übereinstimmungsgrads zwischen dem Parameter und dem Schlüsselwort auf Grundlage der Vielzahl von ersten Übereinstimmungsgraden und eines Kontexts des Parameters in der Anforderungsnachricht.

7. Server nach Anspruch 6, wobei der Prozessor dazu konfiguriert ist, das Datenleckerkennungsprogramm, das im Speicher gespeichert ist, auszuführen, um die Vorgänge des Abgleichens (S21) des Parameters, der in der Anforderungsnachricht enthalten ist, mit dem Schlüsselwort, das im Voraus durch maschinelles Einlernen erlangt wurde, und Erlangen des Übereinstimmungsgrads zwischen dem Parameter und dem Schlüsselwort durchzuführen durch:
Teilen (S23) des Parameters, der in der Anforderungsnachricht enthalten ist, in einen ersten Subparameter und einen zweiten Subparameter gemäß Schlüsselwörtern, die im Voraus durch maschinelles Einlernen erlangt wurden;
Abgleichen (S24) der Schlüsselwörter, die im Voraus durch maschinelles Einlernen erlangt wurden, jeweils mit dem ersten Subparameter und dem zweiten Subparameter, um eine erste Wahrscheinlichkeit der Übereinstimmung zwischen dem ersten Subparameter und einem ersten Schlüsselwort und eine zweite Wahrscheinlichkeit der Übereinstimmung zwischen dem zweiten Subparameter und einem zweiten Schlüsselwort zu bestimmen; und
Bestimmen (S25) des Übereinstimmungsgrads zwischen dem Parameter und dem Schlüsselwort auf Grundlage der ersten Wahrscheinlichkeit, der zweiten Wahrscheinlichkeit und eines Kontexts des Parameters in der Anforderungsnachricht.

8. Server nach Anspruch 6, wobei der Prozessor dazu konfiguriert ist, das Datenleckerkennungsprogramm, das im Speicher gespeichert ist, auszuführen, um nach dem Empfangen (S10) der Anforderungsnachricht, die von der Kanalpartei gesendet wurde, die folgenden Vorgänge durchzuführen:
Bestimmen (S40), ob eine Kennung von nichtvertraulichen Daten, die durch die Kanalpartei eingestellt wurde, in der Anforderungsnachricht vorhanden ist; und
Bestimmen (S50), dass kein Leck von Daten der Anforderungsnachricht stattgefunden hat, wenn die Kennung der nichtvertraulichen Daten, die durch die Kanalpartei eingestellt wurde, in der Anforderungsnachricht vorhanden ist.

9. Server nach Anspruch 6, wobei der Prozessor dazu konfiguriert ist, das Datenleckerkennungsprogramm, das im Speicher gespeichert ist, auszuführen, um ferner die folgenden Vorgänge durchzuführen:
Erlangen (S60) eines Antwortpakets, das als Antwort auf die Anforderungsnachricht an die Kanalpartei zurückgegeben wird;
Vergleichen (S70) von Daten, die in dem Antwortpaket enthalten sind, mit im Voraus aufgezeichneten Zielparametern in entsprechenden Feldern der Anforderungsnachricht; und
Bestimmen (S80), dass ein Leck der in dem Antwortpaket enthaltenen Daten stattgefunden hat, und Aufzeichnen der zugehörigen Daten des Antwortpakets, wenn das Antwortpaket mehr Daten als die im Voraus aufgezeichneten Zielparameter der entsprechenden Felder enthält.

10. Computerlesbares Speichermedium, auf dem ein oder mehrere Programme gespeichert sind, die bei Ausführung durch einen oder mehrere Prozessoren bewirken, dass die folgenden Vorgänge durchgeführt werden:
Empfangen (S10) einer Anforderungsnachricht, die von einer Kanalpartei gesendet wird;
Abgleichen (S20) eines Parameters, der in der Anforderungsnachricht enthalten ist, mit einem Schlüsselwort, das im Voraus durch maschinelles Einlernen erlangt wurde, und Erlangen eines Übereinstimmungsgrads zwischen dem Parameter und dem Schlüsselwort auf Grundlage des Abgleichergebnisses; und
Bestimmen (S30), dass ein Leck der Daten der Anforderungsnachricht stattgefunden hat, und Aufzeichnen zugehöriger Daten der Anforderungsnachricht, wenn der Übereinstimmungsgrad höher als ein voreingestellten Schwellenwert ist;
**dadurch gekennzeichnet, dass** der Vorgang des Abgleichens (S20) eines Parameters, der in der Anforderungsnachricht enthalten ist, mit einem Schlüsselwort, das im Voraus durch maschinelles Einlernen erlangt wurde, und Erlangen eines Übereinstimmungsgrads zwischen dem Parameter und dem Schlüsselwort auf Grundlage des Abgleichergebnisses umfasst:
Abgleichen (S21) des Parameters, der in der Anforderungsnachricht enthalten ist, mit dem Schlüsselwort, das im Voraus durch maschinelles Einlernen erlangt wurde, um eine Vielzahl von ersten Übereinstimmungsgraden zwischen dem Parameter und dem Schlüsselwort zu bestimmen, wobei die Vielzahl von ersten Übereinstimmungsgraden jeweils einer Vielzahl von Bedeutungen der Parameter entspricht; und
Bestimmen (S22) des Übereinstimmungsgrads zwischen dem Parameter und dem Schlüsselwort auf Grundlage der Vielzahl von ersten Übereinstimmungsgraden und eines Kontexts des Parameters in der Anforderungsnachricht.

11. Computerlesbares Speichermedium nach Anspruch 10, wobei das eine oder die mehreren Programme bei Ausführung durch den einen oder die mehreren Prozessoren bewirken, dass die folgenden Vorgänge beim Abgleichen des Parameters, der in der Anforderungsnachricht enthalten ist, mit dem Schlüsselwort, das im Voraus durch maschinelles Einlernen erlangt wurde, und Erlangen des Übereinstimmungsgrads zwischen dem Parameter und dem Schlüsselwort durchgeführt werden:
Teilen (S23) des Parameters, der in der Anforderungsnachricht enthalten ist, in einen ersten Subparameter und einen zweiten Subparameter gemäß Schlüsselwörtern, die im Voraus durch maschinelles Einlernen erlangt wurden;
Abgleichen (S24) der Schlüsselwörter, die im Voraus durch maschinelles Einlernen erlangt wurden, jeweils mit dem ersten Subparameter und dem zweiten Subparameter, um eine erste Wahrscheinlichkeit der Übereinstimmung zwischen dem ersten Subparameter und einem ersten Schlüsselwort und eine zweite Wahrscheinlichkeit der Übereinstimmung zwischen dem zweiten Subparameter und einem zweiten Schlüsselwort zu bestimmen; und
Bestimmen (S25) des Übereinstimmungsgrads zwischen dem Parameter und dem Schlüsselwort auf Grundlage der ersten Wahrscheinlichkeit, der zweiten Wahrscheinlichkeit und eines Kontexts des Parameters in der Anforderungsnachricht.

12. Computerlesbares Speichermedium nach Anspruch 10, wobei das eine oder die mehreren Programme bei Ausführung durch den einen oder die mehreren Prozessoren ferner bewirken, dass nach dem Empfangen der Anforderungsnachricht, die von der Kanalpartei gesendet wird, die folgenden Vorgänge durchgeführt werden:
Bestimmen (S40), ob eine Kennung von nichtvertraulichen Daten, die durch die Kanalpartei eingestellt wurde, in der Anforderungsnachricht vorhanden ist; und
Bestimmen (S50), dass kein Leck von Daten der Anforderungsnachricht stattgefunden hat, wenn die Kennung der nichtvertraulichen Daten, die durch die Kanalpartei eingestellt wurde, in der Anforderungsnachricht vorhanden ist.

13. Computerlesbares Speichermedium nach Anspruch 10, wobei das eine oder die mehreren Programme bei Ausführung durch den einen oder die mehreren Prozessoren bewirken, dass die folgenden Vorgänge durchgeführt werden:
Erlangen (S60) eines Antwortpakets, das als Antwort auf die Anforderungsnachricht an die Kanalpartei zurückgegeben wird;
Vergleichen (S70) von Daten, die in dem Antwortpaket enthalten sind, mit im Voraus aufgezeichneten Zielparametern in entsprechenden Feldern der Anforderungsnachricht; und
Bestimmen (S80), dass ein Leck der in dem Antwortpaket enthaltenen Daten stattgefunden hat, und Aufzeichnen der zugehörigen Daten des Antwortpakets, wenn das Antwortpaket mehr Daten als die im Voraus aufgezeichneten Zielparameter der entsprechenden Felder enthält.

## Revendications

1. Procédé de détection d'une fuite d'informations, comprenant les étapes consistant à :
recevoir (S10) un message de requête envoyé par un participant de canal ;
amener en correspondance (S20) un paramètre inclus dans le message de requête avec un mot clé obtenu au préalable par l'intermédiaire d'un apprentissage machine et obtenir un degré de correspondance entre le paramètre et le mot clé sur la base du résultat de correspondance ; et
déterminer (S30) si des informations du message de requête ont fuité et enregistrer des informations associées au message de requête lorsque le degré de correspondance est supérieur à un seuil prédéfini ;
**caractérisé en ce que** l'opération consistant à amener en correspondance (S20) un paramètre inclus dans le message de requête avec un mot clé obtenu au préalable par l'intermédiaire d'un apprentissage machine et obtenir un degré de correspondance entre le paramètre et le mot clé sur la base du résultat de correspondance comprend les étapes consistant à :
amener en correspondance (S21) le paramètre inclus dans le message de requête avec le mot clé obtenu au préalable par l'intermédiaire d'un apprentissage machine pour déterminer une pluralité de premiers degrés de correspondance entre le paramètre et le mot clé, dans lequel la pluralité de premiers degrés de correspondance correspondent respectivement à une pluralité de significations du paramètre ; et
déterminer (S22) le degré de correspondance entre le paramètre et le mot clé sur la base de la pluralité de premiers degrés de correspondance et d'un contexte du paramètre dans le message de requête.

2. Procédé selon la revendication 1, dans lequel la mise en correspondance (S21) du paramètre inclus dans le message de requête avec le mot clé obtenu au préalable par l'intermédiaire d'un apprentissage machine et l'obtention du degré de correspondance entre le paramètre et le mot clé comprennent les étapes consistant à :
diviser (S23) le paramètre inclus dans le message de requête en un premier sous-paramètre et un second sous-paramètre en fonction de mots clés obtenus au préalable par l'intermédiaire de l'apprentissage machine ;
amener en correspondance (S24) les mots clés obtenus au préalable par l'intermédiaire d'un apprentissage machine avec le premier sous-paramètre et le second sous-paramètre respectivement pour déterminer une première probabilité de correspondance entre le premier sous-paramètre et un premier mot clé et une seconde probabilité de correspondance entre le second sous-paramètre et un second mot clé ; et
déterminer (S25) le degré de correspondance entre le paramètre et le mot clé sur la base de la première probabilité, de la seconde probabilité et d'un contexte du paramètre dans le message de requête.

3. Procédé selon la revendication 1, comprenant en outre, suite à la réception (S10) du message de requête envoyé par le participant de canal, les étapes consistant à :
déterminer (S40) si un identifiant d'informations non sensibles défini par le participant de canal est présent ou non dans le message de requête ; et
déterminer (S50) que les informations du message de requête n'ont pas fuité lorsque l'identifiant d'informations non sensibles défini par le participant de canal est présent dans le message de requête.

4. Procédé selon la revendication 1, comprenant en outre les étapes consistant à :
obtenir (S60) un paquet de réponse qui est renvoyé au participant de canal en réponse au message de requête ;
comparer (S70) les informations contenues dans le paquet de réponse à des paramètres cibles pré-enregistrés dans des champs correspondants du message de requête ; et
déterminer (S80) si les informations contenues dans le paquet de réponse ont fuité et enregistrer les informations associées au paquet de réponse lorsque le paquet de réponse contient plus d'informations que les paramètres cibles pré-enregistrés des champs correspondants.

5. Procédé selon la revendication 2, comprenant en outre les étapes consistant à :
obtenir un paquet de réponse qui est renvoyé au participant de canal en réponse au message de requête ;
comparer les informations contenues dans le paquet de réponse à des paramètres cibles pré-enregistrés dans des champs correspondants du message de requête ; et
déterminer si les informations contenues dans le paquet de réponse ont fuité et enregistrer les informations associées au paquet de réponse lorsque le paquet de réponse contient plus d'informations que les paramètres cibles pré-enregistrés des champs correspondants

6. Serveur comprenant une mémoire stockant un programme de détection de fuite d'informations et un processeur configuré pour exécuter le programme de détection de fuite d'informations afin d'exécuter les opérations suivantes consistant à :
recevoir (S 10) un message de requête envoyé par un participant de canal ;
amener en correspondance (S20) un paramètre inclus dans le message de requête avec un mot clé obtenu au préalable par l'intermédiaire d'un apprentissage machine et obtenir un degré de correspondance entre le paramètre et le mot clé sur la base du résultat de correspondance ; et
déterminer (S30) si des informations du message de requête ont fuité et enregistrer des informations associées au message de requête lorsque le degré de correspondance est supérieur à un seuil prédéfini ;
**caractérisé en ce que** l'opération consistant à amener en correspondance (S20) un paramètre inclus dans le message de requête avec un mot clé obtenu au préalable par l'intermédiaire d'un apprentissage machine et obtenir un degré de correspondance entre le paramètre et le mot clé sur la base du résultat de correspondance comprend les étapes consistant à :
amener en correspondance (S21) le paramètre inclus dans le message de requête avec le mot clé obtenu au préalable par l'intermédiaire d'un apprentissage machine pour déterminer une pluralité de premiers degrés de correspondance entre le paramètre et le mot clé, dans lequel la pluralité de premiers degrés de correspondance correspondent respectivement à une pluralité de significations du paramètre ; et
déterminer (S22) le degré de correspondance entre le paramètre et le mot clé sur la base de la pluralité de premiers degrés de correspondance et d'un contexte du paramètre dans le message de requête.

7. Serveur selon la revendication 6, dans lequel le processeur est configuré pour exécuter le programme de détection de fuite d'informations stocké dans la mémoire pour exécuter les opérations de mise en correspondance (S21) du paramètre inclus dans le message de requête avec le mot obtenu au préalable par l'intermédiaire d'un apprentissage machine et obtenir le degré de correspondance entre le paramètre et le mot clé en :
divisant (S23) le paramètre inclus dans le message de requête en un premier sous-paramètre et un second sous-paramètre en fonction de mots clés obtenus au préalable par l'intermédiaire de l'apprentissage machine ;
amenant en correspondance (S24) les mots clés obtenus au préalable par l'intermédiaire d'un apprentissage machine avec le premier sous-paramètre et le second sous-paramètre respectivement pour déterminer une première probabilité de correspondance entre le premier sous-paramètre et un premier mot clé et une seconde probabilité de correspondance entre le second sous-paramètre et un second mot clé ; et en
déterminant (S25) le degré de correspondance entre le paramètre et le mot clé sur la base de la première probabilité, de la seconde probabilité et d'un contexte du paramètre dans le message de requête.

8. Serveur selon la revendication 6, dans lequel le processeur est configuré pour exécuter le programme de détection de fuite d'informations stocké dans la mémoire pour exécuter en outre les opérations suivantes, suite à la réception (S10) du message de requête envoyé par le participant de canal, consistant à :
déterminer (S40) si un identifiant d'informations non sensibles qui est défini par le participant de canal est présent dans le message de requête ; et
déterminer (S50) que les informations du message de requête n'ont pas fuité lorsque l'identifiant des informations non sensibles défini par le participant de canal est présent dans le message de requête.

9. Serveur selon la revendication 6, dans lequel le processeur est configuré pour exécuter le programme de détection de fuite d'informations stocké dans la mémoire pour exécuter en outre les opérations suivantes consistant à :
obtenir (S60) un paquet de réponse qui est renvoyé au participant de canal en réponse au message de requête ;
comparer (S70) les informations contenues dans le paquet de réponse à des paramètres cibles pré-enregistrés dans des champs correspondants du message de requête ; et
déterminer (S80) si les informations contenues dans le paquet de réponse ont fuité et enregistrer les informations associées au paquet de réponse lorsque le paquet de réponse contient plus d'informations que les paramètres cibles pré-enregistrés des champs correspondants.

10. Support de stockage lisible par ordinateur stockant un ou plusieurs programmes lesquels, lorsqu'ils sont exécutés par un ou par plusieurs processeurs provoquent l'exécution des opérations suivantes consistant à :
recevoir (S10) un message de requête envoyé par un participant de canal ;
amener en correspondance (S20) un paramètre inclus dans le message de requête avec un mot clé obtenu au préalable par l'intermédiaire d'un apprentissage machine et obtenir un degré de correspondance entre le paramètre et le mot clé sur la base du résultat de correspondance ; et
déterminer (S30) si des informations du message de requête ont fuité et enregistrer des informations associées au message de requête lorsque le degré de correspondance est supérieur à un seuil prédéfini ;
**caractérisé en ce que** l'opération consistant à amener en correspondance (S20) un paramètre inclus dans le message de requête avec un mot clé obtenu au préalable par l'intermédiaire d'un apprentissage machine et obtenir un degré de correspondance entre le paramètre et le mot clé sur la base du résultat de correspondance comprend les étapes consistant à :
amener en correspondance (S21) le paramètre inclus dans le message de requête avec le mot clé obtenu au préalable par l'intermédiaire d'un apprentissage machine pour déterminer une pluralité de premiers degrés de correspondance entre le paramètre et le mot clé, dans lequel la pluralité de premiers degrés de correspondance correspondent respectivement à une pluralité de significations du paramètre ; et
déterminer (S22) le degré de correspondance entre le paramètre et le mot clé sur la base de la pluralité de premiers degrés de correspondance et d'un contexte du paramètre dans le message de requête.

11. Support de stockage lisible par ordinateur selon la revendication 10, dans lequel le ou les programmes provoquent, lorsqu'ils sont exécutés par un ou par plusieurs processeurs, l'exécution des opérations suivantes consistant à amener en correspondance le paramètre inclus dans le message de requête avec le mot clé obtenu au préalable par l'intermédiaire d'un apprentissage machine et obtenir le degré de correspondance entre le paramètre et le mot clé en :
divisant (S23) le paramètre inclus dans le message de requête en un premier sous-paramètre et un second sous-paramètre en fonction de mots clés obtenus au préalable par l'intermédiaire de l'apprentissage machine ;
amenant en correspondance (S24) les mots clés obtenus au préalable par l'intermédiaire d'un apprentissage machine avec le premier sous-paramètre et le second sous-paramètre respectivement pour déterminer une première probabilité de correspondance entre le premier sous-paramètre et un premier mot clé et une seconde probabilité de correspondance entre le second sous-paramètre et un second mot clé ; et en
déterminant (S25) le degré de correspondance entre le paramètre et le mot clé sur la base de la première probabilité, de la seconde probabilité et d'un contexte du paramètre dans le message de requête.

12. Support de stockage lisible par ordinateur selon la revendication 10, le ou les programmes provoquant en outre, lorsqu'ils sont exécutés par un ou par plusieurs processeurs, l'exécution des opérations suivantes suite à la réception du message de requête envoyé par le participant de canal, consistant à :
déterminer (S40) si un identifiant d'informations non sensibles qui est défini par le participant de canal est présent dans le message de requête ; et
déterminer (S50) si les informations du message de requête ont fuité lorsque l'identifiant d'informations non sensibles défini par le participant de canal est présent dans le message de requête.

13. Support de stockage lisible par ordinateur selon la revendication 10, dans lequel le ou les programmes provoquent, lorsqu'ils sont exécutés par un ou par plusieurs processeurs, l'exécution des opérations suivantes consistant à :
obtenir (S60) un paquet de réponse qui est renvoyé au participant de canal en réponse au message de requête ;
comparer (S70) les informations contenues dans le paquet de réponse à des paramètres cibles pré-enregistrés dans des champs correspondants du message de requête ; et
déterminer (S80) si les informations contenues dans le paquet de réponse ont fuité et enregistrer les informations associées au paquet de réponse lorsque le paquet de réponse contient plus d'informations que les paramètres cibles pré-enregistrés des champs correspondants.
